(19)

Europäisches
Patentamt
European
Patent Office
Office européen
des brevets

(11) **EP 2 418 643 A1**

(12) **EUROPEAN PATENT APPLICATION**

(43) Date of publication:
**15.02.2012 Bulletin 2012/07**

(51) Int Cl.:
***G10L 17/00*** *(2006.01)*

(21) Application number: **10172534.9**

(22) Date of filing: **11.08.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO SE SI SK SM TR**<br>Designated Extension States:<br>**BA ME RS** | • **Lassmann, Thomas**<br>**06543 Stangerode (DE)**<br>• **Heinicke, Robert**<br>**04105 Leipzig (DE)** |
| (71) Applicant: **Software AG**<br>**64297 Darmstadt (DE)** | (74) Representative: **Heselberger, Johannes**<br>**Bardehle Pagenberg**<br>**Prinzregentenplatz 7**<br>**81675 München (DE)** |
| (72) Inventors:<br>• **Nöbel, Lars**<br>**04207 Leipzig (DE)** | |

(54) **Computer-implemented method and system for analysing digital speech data**

(57)     The present invention concerns a computer-implemented method for analysing digital speech data, wherein the method comprises the following steps:
a. extracting at least one audio feature from the digital speech data;
b. automatically deriving at least one speech expression feature from the at least one audio feature using a first rule set, the at least one speech expression feature indicating auditory and / or acoustic characteristics of a speaker; and
c. automatically deriving at least one speech quality factor from the at least one speech expression feature using a second rule set, the at least one speech quality factor indicating an emotional state of the speaker.

Fig. 1

EP 2 418 643 A1

**Description**

**1. Technical Field**

The present invention relates to a computer-implemented method and a system for analysing digital speech data.

**2. The Prior Art**

It is known that phonetic and acoustic factors of human speech can be used to derive conclusions about the content of a human conversation as well as the emotional state and intent of the speaker. In the prior art, various approaches exist for analysing human speech in order to derive such conclusions.

One technique is a statistical analysis of a conversation, wherein a human evaluator manually assesses certain characteristic measures of the conversation, such as length of the conversation, loudness, base frequency and / or speech rate. This can be done based on an evaluation sheet, wherein the human evaluator evaluates predefined criteria while listening to the conversation or a recording thereof, respectively. The evaluation may be based on a scale of grades on a paper-based or software-based evaluation sheet (e.g. a web form).

Furthermore, there are automated techniques known for specific aspects of a conversation that rely on automated detection techniques for the recognition of basic emotions (e.g. Gold-Gate: http://www.gold-gate.com/, Fraunhofer IGD: http://www.igd-r.fraunhofer.de/eis/), gender, age and language of the speaker (e.g. Dt. Telekom Labs: http://www.telekom.de/laboratories), as well as tools for phonetic analysis (e.g. Praat; http://www.fon.hum.uva.nl/praat, WASP: http://www.phon.ucl.ac.uk/resource/sfs/wasp.htm, OpenSMILE: http://www. openaudio.eu/).

Moreover, textual analyses may be performed by first transcribing a conversation by means of speech recognition software and afterwards employing text analysis techniques on the transcript (e.g. European Media Laboratory: http://www.eml-development.de/).

In this context, the European Patent Office has acknowledged the technical contribution of various inventions in the field of speech analysis and has e.g. granted the European patents EP 1 423 846 B1 and EP 1 125 280 B1. EP 1 423 846 B1 and the associated product Voicesense (http://www.voicesense.com) concerns the detection of emotional arousal of a subject by speech analysis. Speech samples are pre-processed into silent and active speech segments and a variety of specific speech parameters are derived. The derived speech parameters are compared to pre-defined subject-independent values representing non-emotional speech to generate a result indicative of emotional arousal. However, the reliability of the generated results highly depend on the quality of the pre-defined non-emotional speech values. Further references concerning speech analysis are US 4,490,840, US 6,275,806 B1, US 6,427,137 B2, US 2004/0093218 A1, US 7,222,075 B2 and US 7,606,701 B2.

However, the known speech analysis techniques have a number of disadvantages. In the above-described manual and textual evaluation approaches, no analysis during live operation, i.e. at the time the actual conversation takes place, is possible. The automated techniques described above still do not allow conclusions about the quality of the conversation without substantial human interaction. As will be appreciated by the person skilled in the art, relying on humans to manually evaluate parts of the speech analysis increases the risk of introducing errors and producing subjective, un-predictable results which cannot be compared objectively and reliably.

It is therefore the technical problem underlying the present invention to provide an automated method and a system for speech analysis that produces reliable results and does not require human intervention, thereby at least partly overcoming the above explained disadvantages of the prior art.

**3. Summary of the Invention**

This problem is according to one aspect of the invention solved by a computer-implemented method for analysing digital speech data. In the embodiment of claim 1, the method comprises the steps of:

a. extracting at least one audio feature from the digital speech data;

b. deriving at least one speech expression feature from the at least one audio feature using a first rule set, the at least one speech expression feature indicating auditory and / or acoustic characteristics of a speaker; and

c. deriving at least one speech quality factor from the at least one speech expression feature using a second rule set, the at least one speech quality factor indicating an emotional state of the speaker.

Accordingly, the embodiment defines a fully automated method for analysing speech quality factors that indicate the emotional state of a human speaker. Since the method is performed by a computer and employs pre-defined rule sets, the derived speech quality factors are particularly reliable, as compared to known manual approaches, since the method of the invention is preferably performed without any human intervention.

In one aspect, the at least one audio feature extracted in step a. comprises at least one measured audio feature selected from the group comprising Signal Energy, Loudness, Critical Band Spectrum, Mel Frequency Cepstral Coefficients (MFCC), Auditory Spectrum, Perceptual Linear Predictive Coefficients, Linear Predictive Coefficients, Line Spectral Frequencies, Fundamental Frequency, Voicing Probability, Jitter, Shimmer, Formant frequencies and / or bandwidths, Zero-Crossing rate, Spectral features, CHROMA features and / or CENS features. In one aspect of the present invention, the above audio features are provided at least in part by the open source library openSMILE, or any other suitable library. Definitions of the audio features can be found in the glossary further below.

In another aspect, the at least one audio feature extracted in step a. comprises at least one aggregated audio feature selected from the group comprising extreme values (minimum and / or maximum), means (arithmetic mean, quadratic mean and / or geometric mean), moments (standard deviation, variance, skewness and / or kurtosis), quantiles (median, quartile, decile and / or percentile), regressions (linear approximation, quadratic approximation and / or regression errors), centroid, peaks, times, duration, discrete cosine transform (DCT) and / or discrete Fourier transform (DFT) and / or zero-crossings. The above aggregated audio features are preferably derived by means of statistical aggregation and transformation functions known in scientific literature (e.g. from mathematics, statistics). In one aspect, they are provided at least in part by existing libraries such as MatLab. Definitions of the above features can be found in the glossary further below. The aggregated audio feature(s) is/are preferably produced by applying the respective function on the measured audio features described further above. Suitable combinations of feature and function may yield more than 1.500 audio features for the further processing.

In yet another aspect, the speech data comprises one or more speech channels and / or metadata. The speech channels carry the digital voice data of the conversation to be analysed. The metadata may comprise all data that components providing the speech data may add to the speech data. The metadata are in one aspect of the invention displayed as additional information, preferably during scoring (see below).

The at least one speech expression feature derived in step b. may be derived from the at least one audio feature and temporal information derived from the digital speech data, such as pause length and / or speech ratio.

Additionally or alternatively, the at least one speech expression feature derived in step b. is derived for the current point in time of a conversation reflected by the speech data, for the duration of a conversation reflected by the speech data up to the current point in time and / or for the total duration of a conversation reflected by the speech data. Accordingly, it is possible to derive characteristic features of "snapshots" of the conversation to be analysed and / or of the overall conversation, such as the current value, the average value since the beginning of the conversation and / or a predicted average value at the end of the conversation.

Preferably, the at least one speech expression feature derived in step b. is selected from the group comprising melodic features, dynamic features, temporal features, structuring features, accentuation, articulatory features, tone of voice and / or voice quality, as will be explained in more detail in the description further below.

In yet another aspect, the at least one speech quality factor derived in step c. is selected from the group comprising personality / authenticity, comprehensibility, situation adequacy, emotionality, communication skill and / or conversation partner orientation. Preferably, all of the above speech quality factors are derived, thereby producing a particularly comprehensive analysis of the speaker's voice carried by the digital speech data. Definitions of the above speech quality factors can be found in the glossary further below.

In a preferred embodiment of the invention, the first rule set and / or the second rule set comprises at least one binary decision tree and / or at least one Logistic Model Tree, as will be explained in more detail further below.

In a further aspect, the method comprises the further step of deriving at least one score from the at least one speech quality factor derived in step c. The at least one score may comprise a numeric value of the at least one speech quality factor and / or an aggregated value of a plurality of speech quality factors, such as mean, maximum and / or minimum. Accordingly, the generated speech quality factors are rated, thereby yielding a concise and comparable evaluation of the digital speech data. Preferably, the derived scores are values on a scale between 0 and 100. In one aspect of the invention, the at least one score can be interpreted as probability (e.g. 100 = "definitely detected", 0 = "definitely not detected"). Additionally or alternatively, at least two scores may be combined to derive a combined score, such as maxima, minima or mean values (e.g. the maximum score over all six speech quality factors or the average over all six speech quality factors).

The method may further comprise the further steps of displaying the at least one score on a display device and / or updating the at least one displayed score during the analysis of the digital speech data, which allows for a real-time, i.e. live evaluation of the analysis results. Alternatively or additionally, the at least one score may be stored in a storage medium and / or at least one report may be generated based on the at least one stored score.

The present invention also concerns a system for analysing digital speech data, wherein the system comprises an extractor module adapted for extracting at least one audio feature from the digital speech data, an evaluator module adapted for automatically deriving at least one speech expression feature from the at least one audio feature using a first rule set, the at least one speech expression feature indicating auditory and / or acoustic characteristics of a speaker, wherein the evaluator module is further adapted for automatically deriving at least one speech quality factor from the at least one speech expression feature using a second rule set, the at least one speech quality factor indicating an emotional state of the speaker.

In further aspects, the system may comprise means for performing any of the above-described methods, as will be explained in more detail further below.

Lastly, a computer-program comprising instructions for implementing any of the above methods is provided.

## 4. Short Description of the Drawings

In the following detailed description, presently preferred embodiments of the invention are further described with reference to the following figures:

Fig. 1:     An overview of a method for analysing digital speech data according to an embodiment of the present invention;

Fig. 2:     An overview of a system for analysing digital speech data supporting live mode according to an embodiment of the present invention;

Fig. 3:     An overview of a system for analysing digital speech data supporting batch mode according to an embodiment of the present invention;

Fig. 4:     An overview of an analyzer module according to an embodiment of the present invention;

Fig. 5:     An example of metadata derived from the digital speech data according to an embodiment of the present invention;

Fig. 6:     An overview of a system for analysing digital speech data in a customer service environment according to an embodiment of the present invention;

Fig. 7:     Exemplary charts showing the base frequency in a neutral and an emotional voice according to an embodiment of the present invention;

Fig. 8:     Exemplary scorings of speech expression features according to an embodiment of the present invention; and

Figs. 9a-b:   Exemplary decision trees according to an embodiment of the present invention.

## 5. Detailed Description

Overview of the computer-implemented method

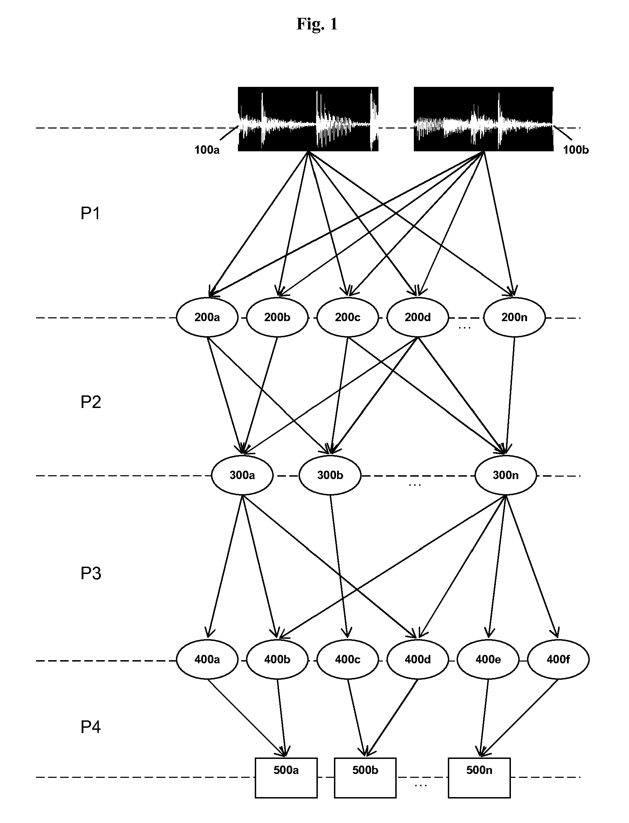

In the following, a presently preferred embodiment of the invention is described with respect to a computer-implemented method as schematically shown in Fig. 1. As can be seen, the method preferably comprises the following four phases P1, P2, P3 and P4:

Phase P1 (Extraction of audio features from the digital speech signal): As can be seen in Fig. 1, during this phase one or more audio features 200a, 200b, ..., 200n (collectively denoted 200 in the following) are extracted from the digital speech data 100 (cf. the two exemplary speech data streams 100a and 100b in Fig. 1). The extraction is preferably achieved by employing signal processing techniques, as will be further described below. The speech data 100 may be segmented into a plurality of segments and aggregated audio features 250 may be produced per segment (not shown in Fig. 1). Audio features 200 and aggregated audio features 250 (collectively called audio features 200 hereinafter) may be extracted at different points in time of the digital speech data 100. In addition to the audio features 200, temporal information, such as pause length and / or speech ratio may be derived from the digital speech data 100. In a preferred embodiment, phase P1 results in the extraction of more than 1.500 audio features 200 from fifteen feature groups per segment.

The above segmentation may be performed on different segmentation layers, such as based on syllables, words, sentences and / or conversation parts (i.e. speech sequences of on particular speaker) of the conversation. In a preferred embodiment, however, the segmentation is performed based on fixed regular time intervals whose length can be configured as desired. Preferably, the time interval length is selected from the interval between 1 second and 5 seconds, and the currently most preferred time interval length is 3 seconds.

Phase P2 (detection of speech expression features): Based on the audio features 200 extracted in phase P1, one or more auditory and acoustic speech expression features 300 are calculated based on a first rule set 350. Preferably, more than one value of at least one of the speech expression features 300 is derived based on individual segments of the digital speech data 100 and / or on the total conversation reflected by the digital speech data 100. In a preferred embodiment, 31 speech expression features 300 are derived, as will be explained in more detail further below.

Phase P3 (detection of speech quality factors): The speech expression features 300 derived in phase P2 are used in phase P3 to derive one or more speech quality factors 400 that reflect the emotional state of the speaker. In a preferred embodiment, six speech quality factors 400 are derived, as will be explained in more detail further below. One or more scores 500 may be calculated for the speech quality factors 400, preferably on a scale of 0 to 100. Each of the speech quality factors 400 may be derived based on a selected subset of the speech expression features 300 in accordance with a second rule set 450 (see below).

Phase P4 (outputting the scores 500 of the speech quality factors 400 in live or batch mode): In live mode, the scores 500 are visualized to a user directly upon derivation in order to allow for an immediate feedback. A short latency of the displayed values may occur due to the preceding phases P1 - P3. However, the latency only depends on the processing power of the underlying computer system. In batch mode, the scores 500 are stored on a storage medium for later processing.

Hardware and software architecture overview

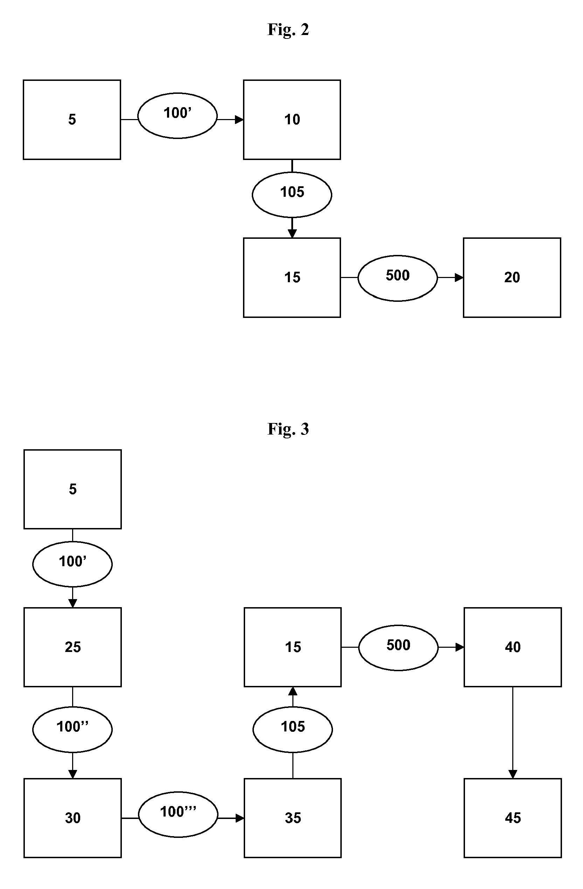

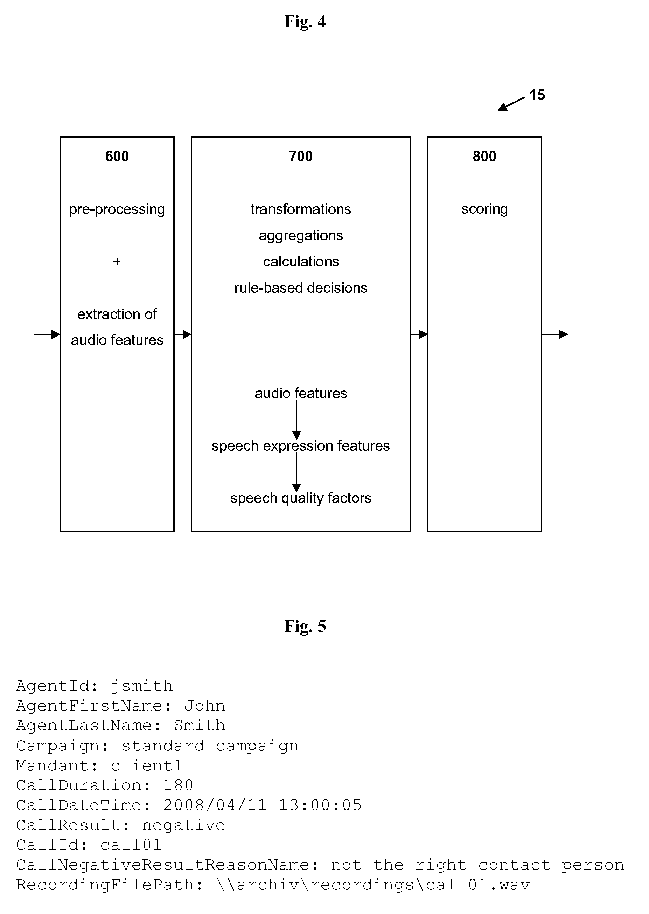

Fig. 2 shows an exemplary hardware and software architecture of a system according to an embodiment supporting the analysis of digital speech data in live mode. As can be seen, a speech input means 5, preferably a private branch exchange (PBX) or other kind of telephone exchange, produces the digital speech data 100 to be analysed. In the example shown in Fig. 2, the digital speech data 100 is in the form of a real time protocol (RTP) stream 100' captured by the speech input means 5. The RPT stream listener 10 receives the RPT stream 100' and generates an analysis job 105 during runtime, wherein the analysis job 105 preferably comprises metadata of the conversation reflected by the digital speech data 100. Exemplary metadata is shown in Fig. 5.

In Fig. 3, an exemplary hardware and software architecture of a system of an embodiment supporting the analysis of digital speech data in batch mode is shown. As can be seen, the RPT stream 100' produced by the speech input means 5 (see above) is received by a recorder 25 and produces a wave file 100", preferably a stereo wave file, which is passed to a recording manager 30. The recording manager 30 adds metadata of the conversation reflected by the digital speech data 100 to the wave file 100" to create an annotated wave file 100''', which is passed to a scheduler 35. The scheduler 35 passes the annotated wave file 100''' as an analysis job 105 to the analyzer 15.

In both live mode (cf. Fig. 2) and batch mode (cf. Fig. 3), an analysis job 105 is sent to the analyzer 15, wherein the analyzer 15 is adapted for performing the above-described method comprising the phases P1 - P3. In batch mode, the analysis method may be performed at a speed higher than that of the digital speech data 100, since the speech data 100 has already been recorded at the time of analysis.

In one embodiment, a system is provided that combines the above-described components relating to live mode and batch mode into one system.

As can be seen in Fig. 4, the analyzer 15 preferably comprises an extractor module 600, an evaluator module 700 and a scoring module 800, which will be further explained in the following:

Extractor module 600

The extractor module 600 receives the digital speech data 100 (preferably in the form of an analysis job 105 (see above) and preferably performs the steps of pre-processing the digital input data 100, followed by the step of extracting P1 at least one audio feature 200 from the digital speech data 100. The pre-processing step is generally optional. For example, the speech data may be compressed (e.g. in MP3 format) and is therefore decompressed during pre-processing, and / or the speech data may be recoded into the required modulation technique such as A-Law during pre-processing (decompression and remodulation).

Preferably, the audio features 200 are extracted from a list of more than 1.500 features. The audio features 200 may not only comprise directly calculated audio features, but also aggregated and calculated audio features 250, which are preferably time-based, i.e. they take account of preceding time intervals.

In a preferred embodiment, the following groups of audio features 200 are extracted from the digital speech data 100:

- Signal Energy
- Loudness
- Critical Band Spectrum
- Mel Frequency Cepstral Coefficients (MFCC)
- Auditory Spectrum
- Perceptual Linear Predictive Coefficients
- Linear Predictive Coefficients
- Line Spectral Frequencies
- Fundamental Frequency
- Voicing Probability
- Voice-Quality: Jitter and Shimmer
- Formant frequencies and bandwidths
- Zero-Crossing rate
- Spectral features
- CHROMA features and CENS features

For each audio feature 200, the corresponding extraction technique known from the prior art is employed.

The following functions can be employed on the above-described audio features 200 in order to derive additional feature dimensions:

- extreme values (minimum and / or maximum)
- means (arithmetic mean, quadratic mean and / or geometric mean)
- moments (standard deviation, variance, skewness and / or kurtosis)
- quantiles (median, quartile, decile and / or percentile)
- regressions (linear approximation, quadratic approximation and / or regression errors)
- centroid
- peaks
- times, duration
- discrete cosine transform (DCT) and / or discrete Fourier transform (DFT)
- zero-crossings

Suitable combinations of audio features and functions may yield more than 1.500 audio features 200.

Evaluator module 700

The evaluator module 700 preferably performs a two-step evaluation method comprising the above-described phases P2 and P3. In a first step P2, based on a first rule set 250 (preferably based on binary decision trees or Logistic Model Trees), one or more speech expression features 300 are calculated. The speech expression features 300 are preferably calculated for the current state of the conversation reflected by the digital speech data 100 and / or for the total duration of the conversation up to the current point in time.

In a preferred embodiment, the following 31 speech expression features 300 are derived from the audio features 200:

Pitch features

1. mean pitch (very high - very low)
2. pitch contour / movement (very choked - very monotonous)
3. pitch range (very wide - very norrow)
4. pitch modification (very erratic - very slided)
5. intonation contour (strongly rising - strongly falling)
6. pitch switch (very strong - very soft)

Dynamic features

7. mean intensity (very loud - very soft)
8. dynamic range (very much - very little)
9. dynamic modification (very erratic - very slided)
10. dynamic movement (very varying - very regular/ monotonous)

Speech rate features

11. speech rate (very fast - very slow)
12. movement of rate (very varying - very regular/ monotonous)
13. modification of rate (very erratic - very slided)
14. movement of rate on the end of the statement (much faster - much slower)

Structural features

15. pause frequency (many - few)

16. pause duration (very long - very short)

17. marginal pause (many - few)

18. interior pause (many - few)

19. accumulation pause (many - few)

20. turn length (very long - very short)

21. structuring level (very strong - very soft)

Accentuation

22. stress frequency (many - few)
23. stress level (very strong - very soft)
24. dynamic stress (many - few)
25. temporal stress (many - few)
26. pitch stress (many - few)

Articulation features

27. preciseness of articulation (very precise - very unprecise)
28. form of articulation (very norm - very regional)

Vocal jitter und vocal quality

29. timbre (very clear - very deep)
30. sonority (very sonorous - very unsonorous)
31. vocalization (low noise - very noisy)

The calculation of the above speech expression features 300 is preferably repeated as soon as new data is received from the extractor module 600. The speech expression features 300 are then used to evaluate the following speech quality factors 400 in phase P3 based on a second rule set 450, which preferably involves binary decision trees or Logistic Model Trees (see further below):
Speech quality factors 400:

- personality / authenticity
- comprehensibility
- situation adequacy
- emotionality
- communication skill
- conversation partner orientation

The above six speech quality factors 400 are preferably evaluated along a scale of 0 to 100. Each of the six speech quality factors 400 is preferably derived from a subset of the speech expression features 300 based on an empiric evaluation model.

Scoring module 800

The scoring module 800 delivers defined scores 500 (preferably numeric values) to an output means in phase P4. The scores 500 may be the evaluation values of the speech quality factors 400 and / or any of mean values, maxima or minima. The analysis system may be configured to decide which score 500 to display on which output means.

Live mode: The scores 500 are preferably transmitted to a live-client 20 (cf. Fig. 2) and displayed on a display means in a suitable, configurable manner (e.g. in the form of a traffic light, dashboard, scale and / or tachometer). The display is updated with each new score 500 delivered by the analyzer 15. The selection of which scores 500 to display may be performed by configuring the client 20 and / or based on the user credentials used when logging onto the client 20, which allows an unambiguous correlation of the user to the speech data at the dialer system.

Batch mode: The scores 500 are preferably transmitted to a storage means of a reporting-server 50 (cf. Fig. 3), which stored the scores 500 and may further perform additional transformations thereon. By means of the reporting-client 45, the scores 50 may be displayed as tables, charts or graphs, including filter and aggregation functions. In contrast to the live-client 20, the reporting-client 45 allows for long term analyses and comparisons to other conversation's scores 500. The selection which scores 500 to display may be performed by configuring the reporting-client 45 and / or the reporting-server 40 and the log-in to the system (as described above).

Iterative approach using Logistic Model Trees and / or binary decision trees

In a preferred embodiment, the evaluator module 700 performs a two-step evaluation approach. In a first step, speech expression features are derived from audio features by means of a first rule set. In a second step, speech quality factors are derived from speech expression features by means of a second rule set. In both steps, the first and second rule set is preferably derived iteratively beforehand by means of data mining techniques.

To this end, a suitably large set of conversations (or alternatively speech expression features and speech quality factors) are annotated and classes are defined for each annotation criterion (typically six classes ranging from "very positive" to "very negative"). In the initial iteration, a hypothesis of the dependencies is defined, which is then evaluated by means of classification algorithms. Subsequently, further optimization steps are performed iteratively in order to improve the classification and thus the overall results.

In a preferred embodiment of the invention, the classifier "Logistic Model Tree" (LMT) is used. In case of only two defined classes, it may be sufficient to use binary decision trees (a preliminary stage of LMT).

How to build Logistic Model Trees:

Machine learning provides tools that automatically analyze large datasets, looking for informative patterns and / or use accumulated data to improve decision making in certain domains. Tree induction methods and linear regression are popular techniques for supervised learning tasks, both for the prediction of discrete classes and numeric quantities.

The standard approach in statistics for solving classification tasks is to use a linear logistic regression model to estimate the influence of the independent variables on the class membership probabilities. In the machine learning community, tree induction is one of the oldest and most popular approaches for classification. Tree induction works by finding a subdivision of the instance space into regions that correspond to a particular class based on the examples in the training data.

A more natural way of dealing with classification tasks would be to use a combination of tree structure and logistic regression. A logistic model tree (LMT) basically comprises a standard decision tree structure with logistic regression functions at the leaves. Accordingly, ordinary decision trees are special cases of logistic model trees.

The preferred algorithm for building logistic model trees (LMTs) addresses the following issues:

1. Growing the tree: e.g. the ID3 algorithm (http://en.wikipedia.org/wiki/ID3_algorithm) or the C4.5 algorithm (cf. http://en.wikipedia.org/wiki/C4.5_algorithm) is used to build a standard classification tree (C4.5 is a successor of ID3)

2. Building the logistic models: a logistic regression model at every node trained on the set of examples at that node is built

3. Pruning: e.g. using the CART pruning algorithm (http://en.wikipedia.org/wiki/Classification_and_regression_tree)

More Details on building Logistic Model Trees can be found in "Logistic Model Trees" by Niels Landwehr (http://www.cs.uni-potsdam.de/~landwehr/ diploma_thesis.pdf)

It will be appreciated that the algorithms C4.5 and / or ID3 are preferably used to derive the decision trees and subsequently the Logistic Model Trees for the first and / or second rule set, however, any other suitable algorithms may be used.

How to interpret the results:

Similar to the evaluation of binary decision trees, the classification results on LMTs are preferably derived by starting at the root node of the tree, evaluating the node rule sets to find the next tree node until the current node is a tree leaf.

In case of ordinary decision trees, the leaf is assigned to one of the predefined classes and the class membership probability is 1. At the leaves of the Logistic Model Tree are functions for determining the class membership probabilities depending on all input parameters. In this context the classes correspond to an evaluation of the respective feature, e.g. class 1 = very strong, class 2 = strong, class 6 = very weak. The functions on the leaves of the LMT are preferably functions of the linear logistic regression model (see further above).

An exemplary hypothesis - representing examples for the first and / or second rule sets (see above) in order to map speech expression features onto speech quality factors - is shown below:

Speech quality factor "conversation partner orientation"

```
Friendliness: choked pitch contour / movement + no
    strong pitch swings + high mean pitch + sonorous
    vocal jitter
```

```
Directedness: sonorous vocal jitter + high internal
    speech tension + choked pitch contour / movement +
    strongly interrogative intonation contour during
    questions
```

```
Intrusiveness: strong pitch swings + strong stress
    level + fast speech rate + no pauses
```

The following exemplary Logistic Model Tree (LMT) for the speech expression feature 300 "speech rate" (see above) consists of only one node, i.e. the root node of the LMT is a leaf node (size of the tree = 1). Therefore, there are no decisions to make in order to find the corresponding leaf. The determination of the class membership (corresponding to the above six speech quality factors) is shown below, wherein the classes are calculated based on corresponding speech expression features with respective probabilities:

```
P(Class 0) = -0.31 + [mfcc_sma[2]_quartile1] * 0.06 +
                [mfcc_sma[3]_iqr1-3] * -0.07 +
                [mfcc_sma[9]_min] * -0.03 +
                [mfcc_sma_de[3]_quartile2] * -1.34 +
                [mfcc_sma_de[8]_kurtosis] * -0.56 +
                [mfcc_sma_de[8]_iqr2-3] * 0.8 +
                [mfcc_sma_de[10]_iqr1-3] * 0.52
```

P(Class 1) = -2.65 + [lspFreq_sma[5]_kurtosis] * 0.42 +
[mfcc_sma_de[2]_iqr1-2] * 0.84 +
[mfcc_sma_de[4]_kurtosis] * -0.35 +
[mfcc_sma_de[5]_minPos] * 0 +
[mfcc_sma_de[12]_iqr1-3] * 0.39 +


[lspFreq_sma_de[7]_iqr1-2] * 70.23 + [voice-
Prob_sma_de_skewness] * -0.86


P(Class 2) = -5.64 + [mfcc_sma[1]_max] * 0.06 +
[mfcc_sma[2]_min] * -0.04 +
[mfcc_sma[4]_range] * 0.03 +
[mfcc_sma[5]_linregc2] * 0.05 +
[lspFreq_sma[5]_iqr1-3] * 10.69 +
[mfcc_sma_de[7]_skewness] * 1.45 +
[mfcc_sma_de[11]_linregc2] * 1.26


P(Class 3) = -6.34 + [mfcc_sma[2]_linregc2] * -0.06 +
[mfcc_sma[10]_iqr2-3] * -0.25 +
[mfcc_sma[12]_skewness] * -1.08 +
[lspFreq_sma[2]_kurtosis] * 0.82 +
[mfcc_sma_de[6]_skewness] * 1.89 +
[mfcc_sma_de[6]_kurtosis] * 0.62 +
[lspFreq_sma_de[2]_kurtosis] * 0.36

```
P(Class 4) =  -3.61 + [mfcc_sma[8]_iqr1-2] * 0.16 +
                      [lspFreq_sma[3]_iqr2-3] * 12.26 +
                      [mfcc_sma_de[3]_iqr2-3] * -1.2 +
                      [mfcc_sma_de[6]_kurtosis] * 0.71 +
                      [mfcc_sma_de[8]_kurtosis] * 0.54 +
                      [lspFreq_sma_de[2]_quartile1] * 63.54 +
                      [lspFreq_sma_de[4]_max] * -19.11
```

```
P(Class 5) =  -2.22 + [mfcc_sma_de[1]_linregerrA] * -1.64 +
                      [mfcc_sma_de[4]_skewness] * -3.32 +
                      [mfcc_sma_de[5]_kurtosis] * 0.84 +
                      [mfcc_sma_de[9]_iqr1-3] * -0.8 +
```

```
                      [lspFreq_sma_de[2]_skewness] * 1.49 +
                      [voiceProb_sma_de_kurtosis] * 0.31
```

Accordingly, for each set of input parameters, there will be preferably determined a set of six class probabilities. The class with the highest probability is chosen as the corresponding class to the set of input parameters. Test results showed that in the above example, the instances correctly classified by the invention are 60.1 %, as compared to the results of a manually conducted evaluation performed by human personnel.

Exemplary Comparison Decision Tree / Logistic Model Tree:

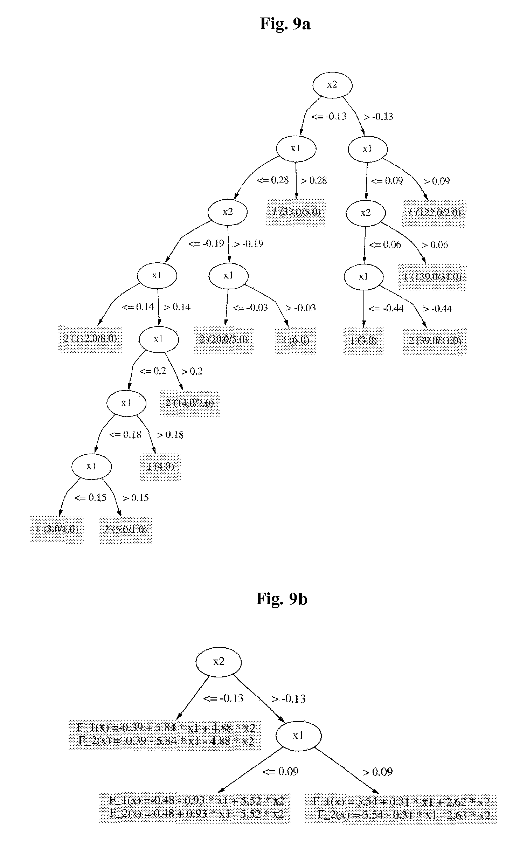

The following example is based on "Logistic Model Trees" by Niels Landwehr (http://www.cs.uni-potsdam.de/~landwehr/diploma_thesis.pdf). The logistic model tree initially divides the instance space into 3 regions and uses logistic regression functions to build the submodels within the regions, while the C4.5 tree partitions the instance space into 12 regions. Figs. 9a and 9b depict the corresponding models, wherein Fig. 9a shows a decision tree constructed according to the C4.5 algorithm, and Fig. 9b shows a Logistic model tree constructed according to the LMT algorithm. At the leaves of the logistic model tree, the functions F1, F2 determine the class membership probabilities.

Preferably, only the input data (i.e. the audio features) are needed for the evaluation of speech expression features and speech quality factors, respectively, which are processed in the LMT and the binary decision tree, respectively. Subsequently, a reduction of the features to be extracted may be performed in the extractor module.

Exemplary usage scenario

In an exemplary usage scenario, the present invention is employed in a customer service environment. It is known that quality management in customer service call centres involves evaluating thousands of telephone conversations each day. Typically customer conversations have to be assessed regarding criteria such as emotionality, customer satisfaction, politeness and adequacy.

Due to the extensive amount of data, manual approaches to speech analysis are not sufficient. Moreover, a manual evaluation of a conversation by definition yields highly subjective results, depending on the human evaluator. In particular in the field of customer service, however, a complete and objective analysis is desired. These objectives can be achieved by the automated computer-implemented method of the present invention, which allows both a live analysis during the respective conversation, as well as an ex-post analysis in an objective manner. Further, the analysis according to the present invention is independent of a permanent storage of the customer conversation, which is a legal requirement in many jurisdictions.

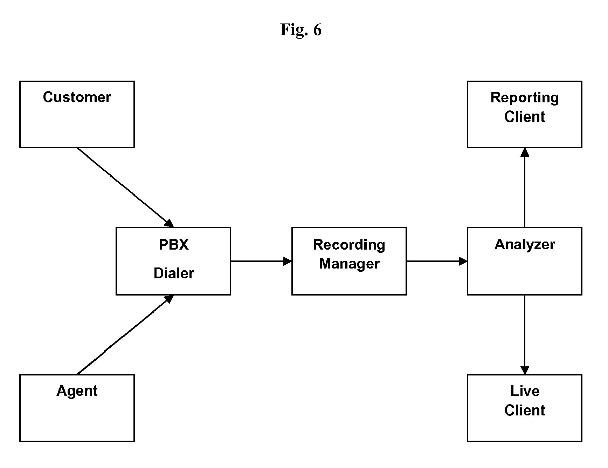

An exemplary hardware and software architecture suitable for the above-described customer service use case if shown in Fig. 6. Accordingly, the architecture comprises the above-explained software components Recorder, Recording Manager, RTP-Stream Listener, Scheduler, Analyzer, Reporting Server, Reporting Client and Live Client. Further required software components are a database system on the server system for storing the recordings, scores and metadata, as well as an operating system. The hardware components comprise a telephone (ISDN, analog or VoIP) connected to a Dialer (Agent), a customer-based telephone connected to the dialer, a PBX unit or dialer system capable of recording RTP streams, a server system comprising a CPU, memory, a hard drive and a network card, as well as a client computer comprising a CPU, memory, a hard drive and a network card.

The present analysis method is in the preferred embodiment based on recordings of conversations in the form of digital speech data. Audio features are extracted from the digitized speech signal in accordance with mathematical methods from signal theory. The audio features are preferably frequency features, such as base frequency, formants and intensity, which are calculated for different segments of the conversation. For each segment, aggregations are produced per frequency feature.

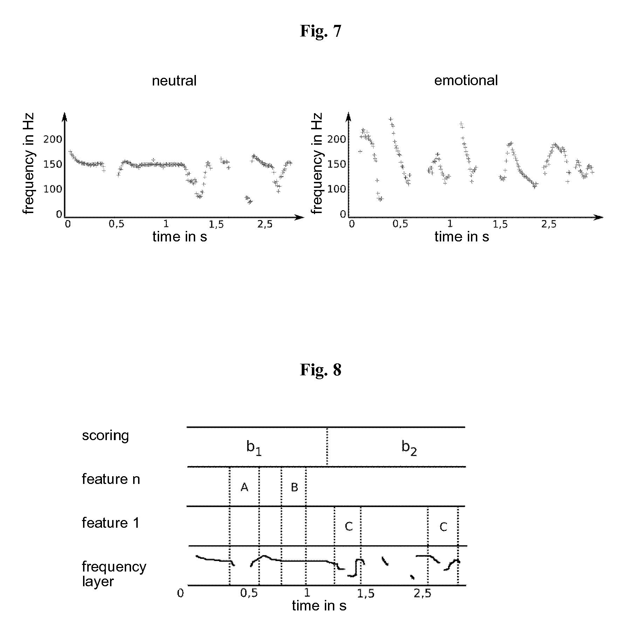

In addition to the frequency features, time-based information such as pause length and speech ratio are detected, so that up to 80 features per segment may be derived. Subsequently, the derived features are further processed into speech expression features, such as base frequency and mean values over a particular time span (cf. Fig. 7).

Applicant has found that there is a gap between a higher-level classification of the perception of the speech quality and the underlying technical layer of information extracted from audio files. The present invention helps to close this gap, in that a method is provided for automatically and accurately deriving speech quality factors from audio features of digital speech data by means of pre-defined rule sets.

With reference to Fig. 8, a conversation is annotated and segmented. The segments are then scored. As can be seen, the bottom layer in Fig. 8 represents an exemplary frequency / audio feature which is characteristic for the classification of a segment. Fig. 8 further shows two exemplary speech expression features 1 and n which represent emotional expressions. In the scoring layer, an evaluation b1, b2 is shown, which represents a recipient's impression of the respective segment.

Glossary

1. Audio Features

Signal Energy: In signal processing, the energy $E_s$ of a continuous-time signal $x(t)$ is defined as

$$E_s = \langle x(t), x(t) \rangle = \int_{-\infty}^{\infty} |x(t)|^2 dt$$

Energy in this context is not, strictly speaking, the same as the conventional notion of energy in physics and the other sciences. The two concepts are, however, closely related, and it is possible to convert from one to the other:

$$E = \frac{E_s}{Z} = \frac{1}{Z} \int_{-\infty}^{\infty} |x(t)|^2 dt$$

where Z represents the magnitude, in appropriate units of measure, of the load driven by the signal.

Loudness: Loudness is the quality of a sound that is the primary psychological correlate of physical strength (amplitude). More formally, it is defined as "that attribute of auditory sensation in terms of which sounds can be ordered on a scale extending from quiet to loud".

Critical Band Spectrum: The term critical band referres to the frequency bandwidth of the then loosely defined auditory filter. The term also refers literally to the specific area on the basilar membrane (an elongated thin sheet of fibers located in the inner ear, inside the cochlea) that goes into vibration in response to an incoming sine wave. Its length depends on the elastic properties of the membrane and on active feedback mechanisms operating within the hearing organ. Converging psychophysical and psychophysiological experiments indicate that the average length of the critical band is ~1mm. Psychophysiologically, beating and auditory roughness sensations can be linked to the inability of the auditory frequency-analysis mechanism to resolve inputs whose frequency difference is smaller than the critical bandwidth and to the resulting instability or periodic "tickling" of the mechanical system (basilar membrane) that resonates in response to such inputs. Critical bands are also closely related to auditory masking phenomena (i.e. reduced audibility of a sound signal when in the presence of a second signal of higher intensity and within the same critical band). Masking phenomena have wide implications, ranging from a complex relationship between loudness (perceptual frame of reference) and intensity (physical frame of reference) to sound compression algorithms. The critical-band spectrum is useful if one wishes to use filters with wide bandwidths at the higher frequencies to combat statistical fluctuations in noise spectra.

Mel Frequency Cepstral Coefficients (MFCC): In sound processing, the mel-frequency cepstrum (MFC) is a representation of the short-term power spectrum of a sound, based on a linear cosine transform of a log power spectrum on a nonlinear mel scale of frequency.

MFCCs are coefficients that collectively make up an MFC. They are derived from a type of cepstral representation of the audio clip (a nonlinear "spectrum-of-a-spectrum"). The difference between the cepstrum and the mel-frequency cepstrum is that in the MFC, the frequency bands are equally spaced on the mel scale, which approximates the human auditory system's response more closely than the linearly-spaced frequency bands used in the normal cepstrum. This frequency warping can allow for better representation of sound, for example, in audio compression.

Auditory Spectrum: The auditory spectrum produces a time-frequency representation of the signal on a logarithmically scaled frequency axis, referred as the tonotopic axis. The auditory spectrogram consists of 128 log-frequency bins and can be approximated as:

$$X_A[n,l] = \max(\partial_l g(\partial_n x[n] *_n h[n,l]), 0)$$

Perceptual Linear Predictive Coefficients: Perceptual linear prediction is a technique for speech analysis that uses three psycho-acoustic concepts to estimate the auditory spectrum:

1. critical-band spectral analysis

2. the equal loudness curve

3. the intensity power law

The PLP algorithm uses each of these concepts:

1. Compute power spectrum

2. Warp the frequency axis according to the bark scale

3. Convolve with critical-band masking curve and down-sample

4. Perform equal-loudness preemphasis

5. Perform intensity-loudness (cube root) warping

Linear Predictive Coefficients: Linear Prediction is an important signal modeling tool which captures correlation information in the form of prediction coefficients. In digital audio signal processing, linear prediction computes a superior spectral envelope that emphasizes spectral peaks (cf. https://ccrma.stanford.edu/-jos/sasp/Computation_Linear-Prediction_Coefficients .html).

Line Spectral Frequencies: Line spectral frequencies (LSF) are used to represent linear prediction coefficients (LPC) for transmission over a channel. LSPs have several properties (e.g. smaller sensitivity to quantization noise) that make them superior to direct quantization of LPCs.

Fundamental Frequency: The fundamental tone, often referred to simply as the fundamental and abbreviated f0 or F0, is the lowest frequency in a harmonic series.

Voicing Probability: percentage of unvoiced and voiced energy for each harmonic within each of a plurality of bands of a speech signal spectrum.

Jitter / Shimmer: Jitter and shimmer represent the variations that occur in the fundamental frequency. Whereas jitter indicates the variability or perturbation of fundamental frequency, shimmer refers to the same perturbation, but it is related to amplitude of sound wave, or intensity of vocal emission. Jitter is affected mainly because of lack of control of vocal fold vibration and shimmer with reduction of glottic resistance and mass lesions in the vocal folds, which are related with presence of noise at emission and breathiness.

Formant frequencies and / or bandwidths: Formants are the distinguishing or meaningful frequency components of human speech and of singing. By definition, the information that humans require to distinguish between vowels can be represented purely quantitatively by the frequency content of the vowel sounds. In speech, these are the characteristic partials that identify vowels to the listener. Most of these formants are produced by tube and chamber resonance, but a few whistle tones derive from periodic collapse of Venturi effect low-pressure zones. The formant with the lowest frequency is called f1, the second f2, and the third f3. Most often the two first formants, f1 and f2, are enough to disambiguate the vowel. These two formants determine the quality of vowels in terms of the open/close and front/back dimensions (which have traditionally, though not entirely accurately, been associated with the position of the tongue). Thus the first formant f1 has a higher frequency for an open vowel (such as [a]) and a lower frequency for a close vowel (such as [i] or [u]); and the second formant f2 has a higher frequency for a front vowel (such as [i]) and a lower frequency for a back vowel (such as [u]). Vowels will almost always have four or more distinguishable formants; sometimes there are more than six. However, the first two formants are most important in determining vowel quality, and this is often displayed in terms of a plot of the first formant against the second formant, though this is not sufficient to capture some aspects of vowel quality, such as rounding.

Zero-Crossing rate: The zero-crossing rate is the rate of sign-changes along a signal, i.e., the rate at which the signal changes from positive to negative or back. This feature has been used heavily in both speech recognition and music information retrieval and is defined formally as

$$zcr = \frac{1}{T-1} \sum_{t=1}^{T-1} \mathbb{I}\{s_t s_{t-1} < 0\}$$

where $S$ is a signal of length $T$ and the indicator function $\mathbb{I}\{A\}$ is 1 if its argument $A$ is true and 0 otherwise.

Spectral features: In a first step, we decompose a given audio signal into 88 frequency bands with center frequencies corresponding to the pitches A0 to C8 (MIDI pitches $p = 21$ to $p = 108$). In our implementation, the decomposition is realized by a suitable multirate filter bank consisting of elliptic filters. Then, for each subband, we compute the short-time mean-square power (STMSP). The STMSP features measure the local energy content of each pitch subband and indicate the presence of certain musical notes within the audio signal.

CHROMA (octave warped semitone spectra): In music, a pitch class is a set of all pitches that are a whole number of octaves apart, e.g., the pitch class C consists of the Cs in all octaves. "The pitch class C stands for all possible Cs, in whatever octave position." Thus, using scientific pitch notation, the pitch class "C" is the infinite set

$$\{Cn : n \text{ is an integer}\} = \{..., C\text{-}2, C\text{-}1, C0, C1, C2, C3 ...\}$$

Pitch class is important because human pitch-perception is periodic: pitches belonging to the same pitch class are perceived as having a similar "quality" or "color", a phenomenon called octave equivalence.

Psychologists refer to the quality of a pitch as its "chroma". A "chroma" is an attribute of pitches, just like whiteness is an attribute of white things. A "pitch class" is a set of all pitches sharing the same chroma, just like "the set of all white things" is the collection of all white objects

Chroma-based features represent the short-time energy of the signal in each of the 12 pitch classes. Often these chroma features are computed by suitably pooling spectral coefficients obtained from a short-time Fourier transform. In our implementation, we use the STMSP pitch decomposition to derive chroma features by suitably summing up the pitch subbands that correspond to the same chroma. For example, to compute the STMSP of the chroma A, we add up the STMSPs of the pitches A0 ,A1,...,A7. The resulting chroma vectors can then be normalized with respect to different norms.

CENS features: Adding a further degree of abstraction by considering short-time statistics over energy distributions within the chroma bands, one obtains CENS (Chroma Energy Normalized Statistics) features, which constitute a family of scalable and robust audio features. CENS features strongly correlate to the short-time harmonic content of the underlying audio signal and absorb variations of properties such as dynamics, timbre, articulation, execution of note groups, and temporal micro-deviations (cf. http://www.mpi-inf.mpg.de/~mmueller/chromatoolbox/).

Further literature on audio features may be found at http://www.interspeech2009.org/conference/myschedule/search.php (Search Term: "Speech Analysis"), http://www.mmk.ei.tum.de/publ/pdf/09/09eybl.pdf and http://www.amazon.de/Automatic-Recognition-Communication-Networks-Advances/dp/1848001428/.

2. Aggregated Audio Features

extreme values (minimum and / or maximum): highest and lowest values of a function (see below)
means (arithmetic mean, quadratic mean and / or geometric mean): mean values of a function (see below)

Power mean: The generalized mean, also known as the power mean or Hölder mean, is an abstraction of the quadratic, arithmetic, geometric and harmonic means. It is defined for a set of n positive numbers xi by

$$\bar{x}(m) = \left( \frac{1}{n} \cdot \sum_{i=1}^{n} x_i^m \right)^{1/m}$$

By choosing the appropriate value for the parameter $m$ we get

| | |
|---|---|
| $m \to \infty$ | Maximum |
| $m = 2$ | Quadratic mean |
| $m = 1$ | Arithmetic mean |
| $m \to 0$ | Geometric mean |
| $m = -1$ | Harmonic mean |
| $m \to -\infty$ | Minimum |

Moments (standard deviation, variance, skewness and / or kurtosis): A moment is a quantitative measure of the shape of a set of points. The nth moment of a real-valued function f(x) of a real variable about a value c is

$$\mu'_n = \int_{-\infty}^{\infty} (x - c)^n f(x)\, dx.$$

It is possible to define moments for random variables in a more general fashion than moments for real values. The moment of a function, without further explanation, usually refers to the above expression with c = 0.

Usually, except in the special context of the problem of moments, the function f(x) will be a probability density function. The nth moment about zero of a probability density function f(x) is the expected value of Xn and is called a raw moment or crude moment. The moments about its mean $\mu$ are called central moments; these describe the shape of the function, independently of translation.

If f is a probability density function, then the value of the integral above is called the nth moment of the probability distribution. More generally, if F is a cumulative probability distribution function of any probability distribution, which may not have a density function, then the nth moment of the probability distribution is given by the Riemann-Stieltjes integral

$$\mu'_n = \mathbb{E}(X^n) = \int_{-\infty}^{\infty} x^n\, dF(x)$$

where X is a random variable that has this distribution and E the expectation operator or mean. When

$$\mathbb{E}(|X^n|) = \int_{-\infty}^{\infty} |x^n| \, dF(x) = \infty,$$

then the moment is said not to exist. If the nth moment about any point exists, so does (n - 1)th moment, and all lower-order moments, about every point.

Variance: The second central moment is the variance, the positive square root of which is the standard deviation, $\sigma$.

Normalized moments: The normalized nth central moment or standardized moment is the nth central moment divided by $\sigma n$; the normalized nth central moment of x = E((x - $\mu$)n)/$\sigma$n. These normalized central moments are dimensionless quantities, which represent the distribution independently of any linear change of scale.

Skewness: The third central moment is a measure of the lopsidedness of the distribution; any symmetric distribution will have a third central moment, if defined, of zero. The normalized third central moment is called the skewness, often $\gamma$. A distribution that is skewed to the left (the tail of the distribution is heavier on the left) will have a negative skewness. A distribution that is skewed to the right (the tail of the distribution is heavier on the right), will have a positive skewness.

For distributions that are not too different from the normal distribution, the median will be somewhere near $\mu$ - y$\sigma$/6; the mode about $\mu$ - $\gamma\sigma$/2.

Kurtosis: The fourth central moment is a measure of whether the distribution is tall and skinny or short and squat, compared to the normal distribution of the same variance. Since it is the expectation of a fourth power, the fourth central moment, where defined, is always non-negative; and except for a point distribution, it is always strictly positive. The fourth central moment of a normal distribution is $3\sigma^4$.

The kurtosis $\kappa$ is defined to be the normalized fourth central moment minus 3. Some authorities do not subtract three, but it is usually more convenient to have the normal distribution at the origin of coordinates. If a distribution has a peak at the mean and long tails, the fourth moment will be high and the kurtosis positive (platykurtic); and conversely; thus, bounded distributions tend to have low kurtosis (leptokurtic).

The kurtosis can be positive without limit, but $\kappa$ must be greater than or equal to $\gamma^2$ - 2; equality only holds for binary distributions. For unbounded skew distributions not too far from normal, $\kappa$ tends to be somewhere in the area of $\gamma^2$ and $2\gamma^2$.

The inequality can be proven by considering

$$\mathbb{E}((T^2 - aT)^2)$$

where T = (X - $\mu$)/$\sigma$. This is the expectation of a square, so it is non-negative whatever a is; on the other hand, it's also a quadratic equation in a. Its discriminant must be non-positive, which gives the required relationship.

Quantiles (median, quartile, decile and / or percentile): Quantiles are points taken at regular intervals from the cumulative distribution function (CDF) of a random variable. Dividing ordered data into q essentially equal-sized data subsets is the motivation for q-quantiles; the quantiles are the data values marking the boundaries between consecutive subsets. Put another way, the kth q-quantile for a random variable is the value x such that the probability that the random variable will be less than x is at most k/q and the probability that the random variable will be more than x is at most (q - k)/q. There are q - 1 quantiles, with k an integer satisfying 0 < k < q.

Some quantiles have special names:

- The 2-quantile is called the median

- The 4-quantiles are called quartiles

- The 10-quantiles are called deciles

- The 100-quantiles are called percentiles

Regressions (linear approximation, quadratic approximation and / or regression errors): In statistics, regression analysis includes any techniques for modeling and analyzing several variables, when the focus is on the relationship between a dependent variable and one or more independent variables. More specifically, regression analysis helps us understand how the typical value of the dependent variable changes when any one of the independent variables is varied, while the other independent variables are held fixed. Most commonly, regression analysis estimates the conditional expectation of the dependent variable given the independent variables - that is, the average value of the dependent variable when the independent variables are held fixed. Less commonly, the focus is on a quantile, or other location parameter of the conditional distribution of the dependent variable given the independent variables. In all cases, the estimation target is a function of the independent variables called the regression function. In regression analysis, it is also of interest to characterize the variation of the dependent variable around the regression function, which can be described by a probability distribution.

In statistics, linear regression includes any approach to modeling the relationship between a scalar variable y and one or more variables denoted X, such that the model depends linearly on the unknown parameters to be estimated from the data.

Centroid: Of a finite set of points: The centroid of a finite set of points $X_1$, $X_2$, ..., $X_{kin}$ $R^n$ is

$$\mathbf{C} = \frac{\mathbf{X}_1 + \mathbf{X}_2 + \cdots + \mathbf{X}_k}{k}.$$

Peaks: The highest, or sometimes the highest and lowest (see peak-to-peak), points on a varying waveform.

Times: certain values of the time axis

Duration: time between two certain values of the time axis

Discrete cosine transform (DCT): A discrete cosine transform (DCT) expresses a sequence of finitely many data points in terms of a sum of cosine functions oscillating at different frequencies.

Formally, the discrete cosine transform is a linear, invertible function $F : \mathbf{R}^N \to \mathbf{R}^N$ (where $\mathbf{R}$ denotes the set of real numbers), or equivalently an invertible $N \times N$ square matrix. There are several variants of the DCT with slightly modified definitions. The $N$ real numbers $x_0$, ..., $x_{N-1}$ are transformed into the $N$ real numbers $X_0$, ..., $X_{N-1}$ according to one of the formulas:

DCT-I
$$X_k = \frac{1}{2}(x_0 + (-1)^k x_{N-1}) + \sum_{n=1}^{N-2} x_n \cos\left[\frac{\pi}{N-1} nk\right] \qquad k = 0, \ldots, N-1.$$

DCT-II
$$X_k = \sum_{n=0}^{N-1} x_n \cos\left[\frac{\pi}{N}\left(n + \frac{1}{2}\right)k\right] \qquad k = 0, \ldots, N-1.$$

DCT-III
$$X_k = \frac{1}{2}x_0 + \sum_{n=1}^{N-1} x_n \cos\left[\frac{\pi}{N}n\left(k + \frac{1}{2}\right)\right] \qquad k = 0, \ldots, N-1.$$

DCT-IV
$$X_k = \sum_{n=0}^{N-1} x_n \cos\left[\frac{\pi}{N}\left(n + \frac{1}{2}\right)\left(k + \frac{1}{2}\right)\right] \qquad k = 0, \ldots, N-1.$$

Discrete Fourier transform (DFT): the discrete Fourier transform (DFT) is a specific kind of Fourier transform, used in Fourier analysis. It transforms one function into another, which is called the frequency domain representation, or simply the DFT, of the original function (which is often a function in the time domain). But the DFT requires an input function that is discrete and whose non-zero values have a limited (finite) duration. Such inputs are often created by sampling a continuous function, like a person's voice. Unlike the discrete-time Fourier transform (DTFT), it only evaluates enough frequency components to reconstruct the finite segment that was analyzed. Using the DFT implies that the finite segment that is analyzed is one period of an infinitely extended periodic signal; if this is not actually true, a window function has to be used to reduce the artifacts in the spectrum.

The sequence of $N$ complex numbers $x_0, ..., x_{N-1}$ is transformed into the sequence of $N$ complex numbers $X_0, ..., X_{N-1}$ by the DFT according to the formula:

$$X_k = \sum_{n=0}^{N-1} x_n e^{-\frac{2\pi i}{N}kn} \qquad k = 0, \ldots, N-1$$

where i is the imaginary unit and $e^{\frac{2\pi i}{N}}$ is a primitive N'th root of unity.

Zero-crossings: In mathematical terms, a "zero-crossing" is a point where the sign of a function changes (e.g. from positive to negative), represented by a crossing of the axis (zero value) in the graph of the function.

3. Speech quality factors

Authenticity (AU): is part of the employee's behavior and refers to rational, emotional, verbal, non-verbal, visible and invisible signals and information. These must match his intentions in order to make a natural and genuine impression.

Criteria: naturalness/realness, honesty, credibility, frankness

Comprehensibility (VE): includes factors regarding the language, speech and content structure and is the prerequisite to understanding.

Criteria: phonetic level, rhetoric level, content, conciseness/information density, clarity/directness, technical quality

Situation adequacy (SA): is based on a realistic assessment of the situation and all of its underlying factors (with regard to the person, language, speech and voice). Situation adequacy is evident on the level of speech expression as soon as the employee can make his concern sufficiently clear to the conversation partner.

Criteria: time frame, topical reference, reference to the listener, linguistic adequacy, speaking acceptability

Emotionality (EM): does not primarily refer to the basic emotions (fury, revulsion, fear, joy, anger) but to discernible emotional moods that come up temporarily and variably in a conversation.

Criteria: expectedness (expected versus unexpected), valency (positive versus negative), activation (agitated versus calm), dominance (strong versus weak)

Communication skill (GF): becomes apparent in the way the speaker positions himself within the conversation and tries to control it using the speech expression features and language characteristics. The conversation must be seen as an interaction.

Criteria: monologue versus dialog, central theme/argumentation, structure versus flexibility, competence

Conversation partner orientation (GO): becomes apparent in the continuous effort of the employee to understand his conversation partner's statements on different levels and to see them from his point of view in order to react appropriately in the course of the conversation.

Criteria: bearing, empathy, kindness/politeness/interest/attention/commitment, appreciation/cooperativeness

4. Logistic Model Trees

A logistic model tree (LMT) is an algorithm for supervised learning tasks which is combined with linear logistic regression and tree induction.

Decision Tree Learning: Decision tree learning, used in data mining and machine learning, uses a decision tree as a predictive model which maps observations about an item to conclusions about the item's target value. More descriptive names for such tree models are classification trees or regression trees. In these tree structures, leaves represent classifications and branches represent conjunctions of features that lead to those classifications.

In decision analysis, a decision tree can be used to visually and explicitly represent decisions and decision making. In data mining, a decision tree describes data but not decisions; rather the resulting classification tree can be an input for decision making.

Decision tree learning is a common method used in data mining. The goal is to create a model that predicts the value of a target variable based on several input variables. Each interior node corresponds to one of the input variables; there are edges to children for each of the possible values of that input variable. Each leaf represents a value of the target variable given the values of the input variables represented by the path from the root to the leaf.

A tree can be "learned" by splitting the source set into subsets based on an attribute value test. This process is repeated on each derived subset in a recursive manner called recursive partitioning. The recursion is completed when the subset at a node all has the same value of the target variable, or when splitting no longer adds value to the predictions.

In data mining, trees can be described also as the combination of mathematical and computational techniques to aid the description, categorisation and generalisation of a given set of data.

Logistic Regression: In statistics, logistic regression (sometimes called the logistic model or logit model) is used for prediction of the probability of occurrence of an event by fitting data to a logit function logistic curve. It is a generalized linear model used for binomial regression. Like many forms of regression analysis, it makes use of several predictor variables that may be either numerical or categorical. For example, the probability that a person has a heart attack within a specified time period might be predicted from knowledge of the person's age, sex and body mass index. Logistic regression is used extensively in the medical and social sciences as well as marketing applications such as prediction of a customer's propensity to purchase a product or cease a subscription.

**Claims**

1. A computer-implemented method for analysing digital speech data (100), wherein the method comprises the following steps:

   a. extracting (P1) at least one audio feature (200) from the digital speech data (100);
   b. automatically deriving (P2) at least one speech expression feature (300) from the at least one audio feature (200) using a first rule set (350), the at least one speech expression feature (300) indicating auditory and / or acoustic characteristics of a speaker; and
   c. automatically deriving (P3) at least one speech quality factor (400) from the at least one speech expression feature (300) using a second rule set (450), the at least one speech quality factor (400) indicating an emotional state of the speaker.

2. The method of claim 1, wherein the at least one audio feature (200) extracted in step a. comprises at least one measured audio feature selected from the group comprising Signal Energy, Loudness, Critical Band Spectrum, Mel Frequency Cepstral Coefficients (MFCC), Auditory Spectrum, Perceptual Linear Predictive Coefficients, Linear Predictive Coefficients, Line Spectral Frequencies, Fundamental Frequency, Voicing Probability, Jitter, Shimmer, Formant frequencies and / or bandwidths, Zero-Crossing rate, Spectral features, CHROMA features and / or CENS features.

3. The method of claim 1 or 2, wherein the at least one audio feature (200) extracted in step a. comprises at least one aggregated audio feature (250) selected from the group comprising extreme values (minimum and / or maximum), means (arithmetic mean, quadratic mean and / or geometric mean), moments (standard deviation, variance, skewness and / or kurtosis), quantiles (median, quartile, decile and / or percentile), regressions (linear approximation, quadratic approximation and / or regression errors), centroid, peaks, times, duration, Discrete Cosine Transform (DCT) and / or discrete Fourier transform (DFT) and / or zero-crossings.

4. The method of any of the preceding claims, wherein the digital speech data (100) comprises one or more speech channels and / or metadata.

5. The method of any of the preceding claims, wherein the at least one speech expression feature (300) derived in step b. is derived from the at least one audio feature (200) and temporal information derived from the digital speech data (100), such as pause length and / or speech ratio.

6. The method of any of the preceding claims, wherein the at least one speech expression feature (300) derived in step b. is derived for the current point in time of a conversation reflected by the digital speech data (100), for the duration of a conversation reflected by the digital speech data (100) up to the current point in time and / or for the total duration of a conversation reflected by the digital speech data (100).

7. The method of any of the preceding claims, wherein the at least one speech expression feature (300) derived in step b. is selected from the group comprising melodic features, dynamic features, temporal features, structuring features, accentuation, articulatory features, tone of voice and / or voice quality.

8. The method of any of the preceding claims, wherein the at least one speech quality factor (400) derived in step c. is selected from the group comprising personality / authenticity, comprehensibility, situation adequacy, emotionality, communication skill and / or conversation partner orientation.

9. The method of any of the preceding claims, wherein the first rule set (350) and / or the second rule set (450) comprises at least one binary decision tree and / or at least one Logistic Model Tree.

10. The method of any of the preceding claims, comprising the further step of deriving (P4) at least one score (500) from the at least one speech quality factor (400) derived in step c.

11. The method of the preceding claim, wherein the at least one score (500) comprises a numeric value of the at least one speech quality factor (400) and / or an aggregated value of a plurality of speech quality factors (400), such as mean, maximum and / or minimum.

12. The method of the preceding claims 10 or 11, comprising the further steps of displaying the at least one score (500) on a display device and / or updating the at least one displayed score (500) during the analysis of the digital speech data (100).

13. The method of any of the preceding claims 10 - 12, comprising the further steps of storing the at least one score (500) in a storage medium and / or generating at least one report based on the at least one stored score (500).

14. A system for analysing digital speech data (100), wherein the system comprises:

a. an extractor module (600) adapted for extracting (P1) at least one audio feature (200) from the digital speech data (100);
b. an evaluator module (700) adapted for automatically deriving (P2) at least one speech expression feature (300) from the at least one audio feature (200) using a first rule set (350), the at least one speech expression feature (300) indicating auditory and / or acoustic characteristics of a speaker;
c. wherein the evaluator module (700) is further adapted for automatically deriving (P3) at least one speech quality factor (400) from the at least one speech expression feature (300) using a second rule set (450), the at least one speech quality factor (400) indicating an emotional state of the speaker.

15. A computer-program comprising instructions for implementing a method according to any of the preceding claims 1 - 13.

**Fig. 1**

**Fig. 2**

```
┌─────────┐              ┌─────────┐
│         │    ╱‾‾‾‾╲    │         │
│    5    │───( 100' )──▶│   10    │
│         │    ╲____╱    │         │
└─────────┘              └─────────┘
                              │
                          ╱‾‾‾‾╲
                         ( 105 )
                          ╲____╱
                              │
                              ▼
                         ┌─────────┐   ╱‾‾‾‾╲   ┌─────────┐
                         │   15    │──( 500 )──▶│   20    │
                         │         │   ╲____╱   │         │
                         └─────────┘            └─────────┘
```

**Fig. 3**

```
┌─────────┐
│    5    │
└─────────┘
     │
  ╱‾‾‾‾╲
 ( 100' )
  ╲____╱
     │
     ▼
┌─────────┐
│   25    │
└─────────┘
     │
  ╱‾‾‾‾╲
 ( 100'' )
  ╲____╱
     │
     ▼
┌─────────┐  ╱‾‾‾‾╲   ┌─────────┐  ╱‾‾‾‾╲   ┌─────────┐
│   30    │─( 100''' )▶│   35    │─( 500 )──▶│   40    │
└─────────┘  ╲____╱   └─────────┘  ╲____╱   └─────────┘
                          ▲                      │
                      ╱‾‾‾‾╲                     ▼
                     ( 105 )               ┌─────────┐
                      ╲____╱               │   45    │
                                           └─────────┘
```

**Fig. 4**

15

| 600<br><br>pre-processing<br><br>+<br><br>extraction of<br>audio features | 700<br><br>transformations<br>aggregations<br>calculations<br>rule-based decisions<br><br><br>audio features<br>↓<br>speech expression features<br>↓<br>speech quality factors | 800<br><br>scoring |

**Fig. 5**

```
AgentId: jsmith
AgentFirstName: John
AgentLastName: Smith
Campaign: standard campaign
Mandant: client1
CallDuration: 180
CallDateTime: 2008/04/11 13:00:05
CallResult: negative
CallId: call01
CallNegativeResultReasonName: not the right contact person
RecordingFilePath: \\archiv\recordings\call01.wav
```

**Fig. 6**

```
┌──────────┐                                              ┌──────────┐
│ Customer │                                              │Reporting │
│          │                                              │  Client  │
└────┬─────┘                                              └────▲─────┘
     │                                                         │
     │                                                         │
     ▼                                                         │
┌──────────┐      ┌──────────┐      ┌──────────┐
│   PBX    │─────▶│Recording │─────▶│ Analyzer │
│  Dialer  │      │ Manager  │      │          │
└────▲─────┘      └──────────┘      └────┬─────┘
     │                                   │
     │                                   ▼
┌──────────┐                        ┌──────────┐
│  Agent   │                        │   Live   │
│          │                        │  Client  │
└──────────┘                        └──────────┘
```

**Fig. 7**

**Fig. 8**

**Fig. 9a**

**Fig. 9b**

Europäisches
Patentamt

European
Patent Office

Office européen
des brevets

# EUROPEAN SEARCH REPORT

**Application Number**

EP 10 17 2534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 03/015079 A1 (VOICESENSE LTD [IL]; DEGANI YOAV [IL]; ZAMIR YISHAI [IL]) 20 February 2003 (2003-02-20) | 1-8, 10-15 | INV. G10L17/00 |
| Y | * abstract * * page 10, line 25 - page 11, line 6 * * page 11, line 17 - line 18 * * page 11, line 32 - line 33 * * page 13, line 13 - page 14, line 2 * * page 15, line 9 - page 16, line 23 * ----- | 9 | |
| Y | EP 1 256 937 A2 (SONY FRANCE SA [FR]) 13 November 2002 (2002-11-13) | 9 | |
| A | * paragraph [0063] * * paragraph [0070] - paragraph [0074] * * paragraph [0083] * * paragraph [0086] * * paragraph [0091] * ----- | 1-8, 10-15 | |
| A | SHIKLER T S: "An applied framework for automatic inference of affective states from speech", ELECTRICAL AND ELECTRONICS ENGINEERS IN ISRAEL, 2008. IEEEI 2008. IEEE 25TH CONVENTION OF, IEEE, PISCATAWAY, NJ, USA, 3 December 2008 (2008-12-03), pages 553-557, XP031399466, ISBN: 978-1-4244-2481-8 * page 555, left-hand column, line 32 - right-hand column, line 15 * ----- | 1-15 | TECHNICAL FIELDS SEARCHED (IPC) G10L |
| A | MOHAMMED E HOQUE ET AL: "Robust Recognition of Emotion from Speech", 1 January 2006 (2006-01-01), INTELLIGENT VIRTUAL AGENTS LECTURE NOTES IN COMPUTER SCIENCE;LECTURE NOTES IN ARTIFICIAL INTELLIG ENCE;LNCS, SPRINGER, BERLIN, DE, PAGE(S) 42 - 53, XP019039024, ISBN: 978-3-540-37593-7 * the whole document * ----- | 1-15 | |

The present search report has been drawn up for all claims

| Place of search | Date of completion of the search | Examiner |
|---|---|---|
| The Hague | 27 January 2011 | Burchett, Stefanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**

EP 10 17 2534

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2011

| Patent document cited in search report | | Publication date | Patent family member(s) | | Publication date |
|---|---|---|---|---|---|
| WO 03015079 | A1 | 20-02-2003 | AT | 322067 T | 15-04-2006 |
| | | | CA | 2456625 A1 | 20-02-2003 |
| | | | DE | 60210295 T2 | 07-12-2006 |
| | | | EP | 1423846 A1 | 02-06-2004 |
| | | | ES | 2261706 T3 | 16-11-2006 |
| | | | IL | 144818 A | 20-08-2006 |
| | | | US | 2004249634 A1 | 09-12-2004 |
| EP 1256937 | A2 | 13-11-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1423846 B1
- EP 1125280 B1
- US 4490840 A
- US 6275806 B1
- US 6427137 B2
- US 20040093218 A1
- US 7222075 B2
- US 7606701 B2